# EUROPEAN PATENT SPECIFICATION

(11) **EP 3 388 904 B1**
(45) Date of publication and mention of the grant of the patent: **15.03.2023**
(21) Application number: 17166428.7
(22) Date of filing: 13.04.2017
(51) Int. Cl.: G05B 19/042

(54) **MULTICORE ARCHITECTURE, INTERFACE CARD AND METHOD OF PROCESSING DATA PACKETS**
MEHRKERNARCHITEKTUR, SCHNITTSTELLENKARTE UND VERFAHREN ZUR VERARBEITUNG VON DATENPAKETEN
ARCHITECTURE MULTIC UR, CARTE D'INTERFACE ET PROCÉDÉ DE TRAITEMENT DE PAQUETS DE DONNÉES

(43) Date of publication of application: 17.10.2018
(73) Proprietor: duagon AG, 8953 Dietikon (CH)
(72) Inventor: Dr. Dilger, Markus, 8820 Wädenswil (CH); Dr. Eberli, Stefan, 8038 Zürich (CH); Hofer, Daniel, 8953 Dietikon (CH); Meier, Michael, 8953 Dietikon (CH)
(74) Representative: Hentrich Patent- & Rechtsanwaltspartnerschaft mbB

(56) References cited:
- US-A1- 2006 224 811
- US-A1- 2010 256 921
- US-B1- 7 490 350
- SHANKER SHREEJITH ET AL: "Reconfigurable Computing in Next-Generation Automotive Networks", IEEE EMBEDDED SYSTEMS LETTERS, IEEE, USA, vol. 5, no. 1, 1 March 2013 (2013-03-01), pages 12-15, XP011494889, ISSN: 1943-0663, DOI: 10.1109/LES.2013.2243698
- AGIRRE IRUNE ET AL: "A Safety Concept for a Railway Mixed-Criticality Embedded System Based on Multicore Partitioning", 2015 IEEE INTERNATIONAL CONFERENCE ON COMPUTER AND INFORMATION TECHNOLOGY; UBIQUITOUS COMPUTING AND COMMUNICATIONS; DEPENDABLE, AUTONOMIC AND SECURE COMPUTING; PERVASIVE INTELLIGENCE AND COMPUTING, IEEE, 26 October 2015 (2015-10-26), pages 1780-1787, XP032836250, DOI: 10.1109/CIT/IUCC/DASC/PICOM.2015.268 [retrieved on 2015-12-22]
- TRUJILLO SALVADOR ET AL: "MultiPARTES: Multi-core partitioning and virtualization for easing the certification of mixed-criticality systems", MICROPROCESSORS AND MICROSYSTEMS., vol. 38, no. 8, 1 November 2014 (2014-11-01), pages 921-932, XP055806274, GB ISSN: 0141-9331, DOI: 10.1016/j.micpro.2014.09.004

## Description

### BACKGROUND

The present invention relates to a multicore architecture for communication purposes. In particular the present invention relates a multicore architecture used within train communication networks (TCN). The TCN is normally built of different communication network options, especially wire train bus (WTB), Ethernet train backbone (ETB), multifunction vehicle bus (MVB), controller area network (CAN-bus) and/or Ethernet (ETH) may be provided. The present invention is used for interconnecting different subsystems within a train communication network enabling these subsystems to communicate together or with each other over the TCN.

A large percentage of the costs for the development of safety-related, new and innovative devices for interconnecting difference subsystems within a TCN are incurred by validation and certification processes.

Every function of a train may be categorized into a distinguished safety integrity level (SIL). The network communication device inherits the SIL of the function it is involved with. The safety integrity level is a measurement of performance that is required for a safety instrumented function (SIF). There are safety integrity levels 0 to 4, whereas in safety integrity level 0 the risk is considered to be low and (almost) no hazard may influence the safety integrity level 0 device. The highest safety integrity level is level 4.

Every application and every device which is involved into a safety function with one of the safety integrity levels 1 to 4 has to be assessed by an assessor. The assessor is independent from the development project. In many cases these assessments or certifications are conducted by an external authority which is time and cost consuming. When the assessment is finished, any amendment to the device or to the processes running on the device have to undergo another new assessment procedure. Hence, also an amendment is time and cost consuming.

Furthermore, regarding railway applications, space is also a critical parameter within train communication networks. This is why space-saving designs for the communication devices are desired. However, interface cards provide flexibility to subsystem manufacturer because they do not have to adopt their systems and protocols to the TCN themselves. Additionally, the maintenance of the systems is simplified.

US 2010/256921 A1 describes a field device for measuring the filling level, the pressure or the density of a medium in a container. The field device comprises two processors that are separate from each other. The first processor corresponds to a lower safety standard while the second processor corresponds to a higher safety standard. Functions of the field device that are directed towards safety are carried out in the second processor. Functions that are less critical to safety are carried out in the first processor. Data exchange between the two processors is controlled by way of an operating system.

SHANKER SHREEJITH ET AL: "Reconfigurable Computing in Next-Generation Automotive Networks", IEEE EMBEDDED SYSTEMS LETTERS, IEEE, USA, vol.5, no.1, 1 March 2013 (2013-03-01),pages 12-15, XP011494889, ISSN: 1943-0663,DOI: 10.1109/LES.2013.2243698 proposes reconfigurable computing in future automotive networks that can provide computational capabilities for a diverse range of functions including isolation of safety-critical and/or non-safety-critical applications by using field programmable gate array (FPGAs).

US 2006/224811 A1 teaches a safety control block interfaces to one or more devices utilizing one or more communication protocols wherein a network interface receives and/or transmits data directly from a network. A backplane interface receives and/or transmits data from a backplane. A backplane extension receives and/or transmits data from a backplane. A processing component receives data from at least one of the network interface, backplane interface and backplane extension and determines if the received data is related to safety or non-safety. A safety I/O circuitry receives safety data from the processing component; wherein the safety data is utilized to communicate to at least one control device.

TRUJILLO SALVADOR ET AL: "MultiPARTES: Multi-core partitioning and virtualization for easing the certification of mixed criticality systems", MICROPROCESSORS AND MICROSYSTEMS., vol. 38, no. 8, 1 November 2014 (2014-11-01), pages 921-932, XP055806274, GB ISSN: 0141-9331, DOI: 10.1016/j.micpro.2014.09.004 describes the concept of multicore partitioning and virtualization for easing the certification of mixed criticality systems in a wind power application using a Time-triggered Network-on-Chip (TTNoC).

IRUNE AGIRRE ET AL: "A safety concept for railway mixed-criticality embedded system based on multicore partitioning", 2015 IEEE INTERNATIONAL CONFERENCE ON COMPUTER AND INFORMATION TECHNOLOGY; UBIQUITOUS COMPUTING AND COMMUNICATIONS; DEPENDABLE, AUTONOMIC AND SECURE COMPUTING; PERVASIVE INTELLIGENCE AND COMPUTING, IEEE, 26 October 2015 (2015-10-26), pages 1780-1787, XP032836250, DOI: 10.1 109/CIT/IUCC/DASC/PICOM.2015.268 describes an field programmable gate array (FPGA) comprising four processor cores interconnected through an AMBA AHB bus. Some of the cores are solely for the processing of safety-related data in railway applications, while others process non-safety-related data, only.

US 7 490 350 B1 describes systems and techniques for protecting wireless communication systems from blended electronic attacks that may combine wireless and computer attacks by way of an integrated hardware and software firewall/protection system.

Therefore it is an object of the present invention to provide a multicore architecture, an interface card and a method, which provide enhanced protection against corruption of safety-related data packets.

### SUMMARY OF THE INVENTION

The object relating to the multicore architecture is solved by a multicore architecture according to claim 1. Optional modifications are mentioned in the dependent claims.

The multicore architecture comprises a reconfigurable logic device which includes a first central processor unit (CPU) and a second central processor unit. The first CPU being configured to process safety-related data and preferably to perform safety-related function. This safety-related functionality and the safety-related data is all data which is categorized at least within one of the safety-integrity levels 1 to 4. The second CPU being configured to process non-safety related data and preferably non-safety-related functions only, whereas this non-safety related data is all data which either has no categorization into one of the safety integrity levels or which belongs to safety integrity level 0. According to an example the first CPU and/or the second CPU is formed as a reduced instruction set computer (RISC processor). Other processor types, such as CISC etc., are also possible. Thanks to this multicore architecture it is now possible to update the application (firmware) of the non-safety second CPU without undergoing a further certification. This is possible because the application of the safety first CPU remains untouched. In conventional architectures, the entire functionality is covered by a single CPU or it is on single CPUs each implemented in a different logic device such as an ASIC. The present invention instantiates multiple CPUs inside the same reconfigurable logic device.

According to the invention, the reconfigurable logic device is formed as a field programmable gate array (FPGA). Thereby an updatable multicore architecture for (railway) safety-related application is provided, which, in addition, provides a very space-saving design. The application firmware of the second CPU may be updated and/or another application may be implemented therein. Since this second CPU is used to process non-safety-related data only, another (new) assessment or certification process is not necessary.

According to the invention, the multicore architecture is characterized in that an interprocessor communication device is provided for linking the first CPU to the second CPU and being configured to block interference and/or disturbance of the processes running on the first CPU by the processes of the second CPU, the interprocessor communication device preferably enabling information transfer between the first CPU and the second CPU, whereas the information transfer is preferably bi-directional. The interprocessor communication device is implemented on the reconfigurable logic device itself and serves as a kind of a firewall, namely as a hardware firewall. The interprocessor communication device ensures, that the second CPU cannot interfere and/or disturb the operation of the first CPU.

Preferably, the multicore architecture provides a digital interface module being configured to at least indirectly connect one or more peripheral devices to the first CPU and/or the second CPU. In one example the digital interface module is implemented onto or within the reconfigurable logic device which provides an even more space-saving layout.

Additionally it is preferred, that a network interface module is provided which is configured to at least indirectly connect one or more network devices to the first CPU and/or the second CPU. In an example, the network interface module is implemented onto or within the reconfigurable logic device. Via this network interface module the multicore architecture may communicate with the TCN, e.g. via an Ethernet.

The network interface module may be formed as or may be connected to a multiport, preferably as a three-port, Ethernet switch.

A data splitting device is provided. The data splitting device is implemented onto or within the reconfigurable logic device. The data splitting device is configured to split data packets into the safety-related data packets (comprising data categorized into safety integrity levels 1 to 4) and into the non-safety-related data packets (comprising data categorized into safety integrity level 0 or less). The data splitting device ensures that only the non-safety-related data with safety integrity level 0 or less is directed to the second CPU. Every data packet having a safety integrity level of 1 or more is sent to the first CPU.

To ensure a safe and complete transmission of processed data packets to a host device, a host interface is provided in yet another example. This host interface is at least indirectly connected to the first CPU and/or the second CPU for transmitting processed data packets to a host device. The host device may comprise a host driver enabling a host application running on a microprocessor of the host to communicate with the multicore architecture and thus with the overall TCN. The host application can be, for example, a door control application, a window control application, an on-train climate control application, etc.

In an example of the multicore architecture, a first real time operating system is running on the first CPU and the second real time operating system is running on the second CPU. Additionally the first CPU many run a first embedded application relating to data with safety integrity levels 1 to 4, whereas a second embedded application may be running on the second CPU processing non-safety-related data with safety integrity level 0 or less.

To provide an (at least partially) updatable system, in one example, the second CPU is configured to be reprogrammable. Therefore, in yet another example, the reconfigurable logic device includes a memory (preferably a flash memory). On this memory, both types of data, the safety-related data and the non-safety-related data may be stored. There may also two different memories included in the reconfigurable logic device, whereas one of them stores the safety-related data and the other stores the non-safety-related data. In either case only the part of the memory (flash) image is updateable which concerns the non-safety-related data, functions or programs. Thus, it is possible to update or reprogram the embedded application of the second CPU and/or the second real time operating system. Changes or amendments to the second CPU which are related to non-safety-related data or devices are therefore performed in an easy way without the need for a reassessment or recertification of the whole multicore architecture for railway purposes. In an aspect that is not claimed, an additional or separate programming port may be provided for reprogramming and/or updating the second CPU.

The object relating to the method is solved by the method according to claim 7. Optional aspects are mentioned in the dependent claims.

Of course, more than only one first CPU and/or more than only one second CPU may be included within the reconfigurable logic device. To protect data packets from corruption, (between the first CPU and any host application running on a host device) during processing the one or more safety-related data packets a safety layer is included to the one or more processed safety-related data packets. This safety layer adds a checksum and/or other information to the processed safety-related data packets thereby enabling the host device to detect if a data packet is intact or not. The host device therefore includes a corresponding checking device or application functionality.

Furthermore, the additional following step is possible:
- Transmitting the processed safety-related data packets to a host device or host system preferably using a (multi channel) host interface. The host interface preferably including one or more safety channels for transmitting the processed safety-related data packets and one or more non-safety channels for transmitting the processed non-safety related data packets.

For updating a firmware, a second real time operating system or a second embedded application within the second CPU and thereby to form an updatable multicore architecture, the additional following step is possible:
- Providing a programming port being configured to communicate at least with the second CPU; and
- Updating of a firmware and/or a second real time operating system or embedded application within the second CPU via the programming port, preferably without affecting processes running on the first CPU.

Therefore, it is possible to update the firmware and/or the second real time operating system or embedded application (which are preferably stored to a flash memory of the FPGA), when the whole system is running and/or when the whole system is not running.

The object relating to the interface card is solved by an interface card according to claim 11. This interface card is configured to link a host device to a communication network. The interface card comprises a multicore architecture with a reconfigurable logic device including a first CPU and one or more second CPUs. The first CPU being configured to process safety-related data and the one or more second CPUs being configured to process non-safety-related data only.

Other variations of the multicore architecture, the method of processing data packets and the interface card will become more apparent in the light of the following detailed description as illustrated in the accompanying drawings.

### BRIEF DESCRIPTION OF THE DRAWINGS

- Fig. 1: shows a simplified plan view of a multicore architecture not covered by the invention,
- Fig. 2: shows a simplified plan view of a second illustrative embodiment of a multicore architecture,
- Fig. 3a: is a simplified plan view of a first CPU used within a multicore architecture according to fig. 1 or fig. 2,
- Fig. 3b: is a simplified plan view of a second CPU used within a multicore architecture according to fig. 1 or fig. 2, and
- Fig. 4: shows a simplified plan view of an interface card comprising the multicore architecture of fig. 2 in connection with a host device.

### DETAILED DESCRIPTION

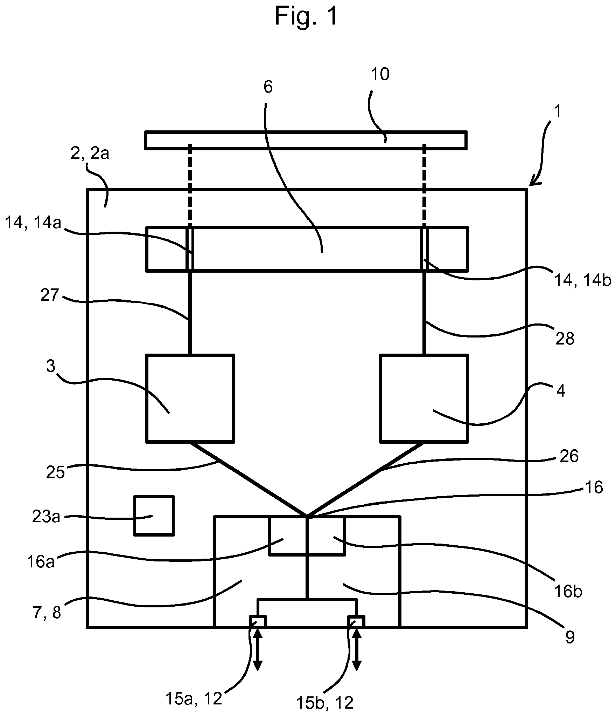

Referring now to fig. 1, a multicore architecture 1 comprises a reconfigurable logic device 2. Possibly, the reconfigurable logic device 2 is formed as a field programmable gate array, FPGA 2a. The FPGA 2a includes a first CPU 3 and a second CPU 4. Both CPUs 3, 4 may be formed as a microcontroller, especially comprising a RISC processor. The first CPU 3 is configured to process safety-related data, whereas the second CPU 4 is configured to process only non-safety-related data. Of course more than only one first CPU 3 may be implemented within or onto the FPGA 2a. It is also possible to include or implement more than only one second CPU 4 within or onto the FPGA 2a.

The multicore architecture 1 includes a digital interface module 6 which is configured to at least indirectly connect one or more peripheral or host devices 11 via a host interface 10 to the reconfigurable logic device 2. In the present case, data packets processed by first CPU 3 and data packets processed by the second CPU 4 may be directed to the peripheral devices, e.g. to the host devices 11.

In the illustrative example, the digital interface module 6 is implemented onto or within the reconfigurable logic device 2, i.e. the FPGA 2a. This digital

interface module 6, in one example, may be formed as a FIFO, as a dual port RAM, etc.. The digital interface module 6 comprises a number of channels 14 that corresponds to the number of CPUs 3, 4 implemented onto or within the FPGA 2a. In the example, two channels 14 are provided within the digital interface module 6, a first channel 14a for transmitting safety-related data to the host device 11 via the host interface 10 and a second channel 14b for transmitting non-safety-related data. Additional channels 14 are possible, too.

The multicore architecture 1 further includes a network interface module 7 which, in the present example, is also implemented within or onto the reconfigurable logic device 2, i.e. the FPGA 2a. This network interface module 7 is configured to at least indirectly connect one or more network devices to the first CPU 3 and/or the second CPU 4. The network interface module 7 may be formed as or may be configured to be connected to a multiport, especially as a three-port Ethernet switch 8. A different number of ports is possible. The network interface module 7 comprises a first input 15a and a second input 15b that are connected to a output port 16 comprising a filtering device 16a. Alternatively or additionally a buffering device 16b is also included within the network interface module 7. This network interface module 7 with its filtering device 16a is formed as a data splitting device 9 configured to split data into the safety-related data and into the non-safety-related data. It is also possible to form the data splitting device 9 separately from the network interface module 7. Beyond the data splitting device 9 the safety-related data is transmitted to the first CPU 3 for further processing.

The non-safety-related data is transmitted to the second CPU 4 for further processing.

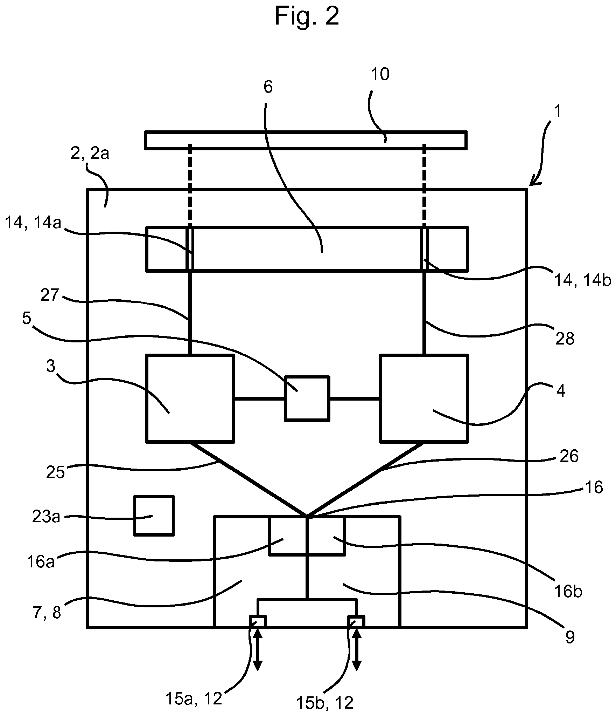

Referring now to fig. 2, an embodiment of a multicore architecture 1 corresponding to the claimed invention is shown. This multicore architecture 1 differs from that one in fig. 1 in that an interprocessor communication device 5 is provided. This interprocessor communication device 5 links the first CPU 3 to the second CPU 4 and is configured to block interference and/or disturbance of the processes running on the first CPU 3 by the processes of the second CPU 4. The example interprocessor communication device 5 enables the communication between the processors, but blocks their interference. The interprocessor communication device 5 is configured to grant access to the data of or on the second CPU 4, but it is configured to deny access to the data of or on the first CPU 3. Or, in other words, the first CPU 3 may access to the data on the second CPU 4, but not the other way round. This interprocessor communication device 5 is also implemented onto or within the reconfigurable logic device 2 and serves merely as a (hardware) firewall between the two or more CPUs 3, 4.

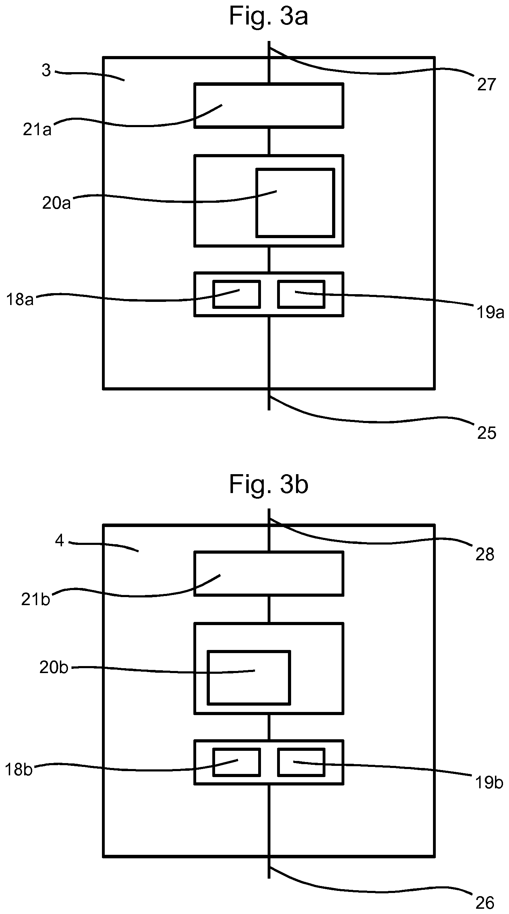

A detailed schematic view on the first CPU 3 is discussed with reference to fig. 3a. The first CPU 3 is configured to run a first real time operating system 18a (RTOS) and comprises a first network communication unit 19a. A first RTOS is not mandatory, but preferred. Furthermore, the first CPU 3 comprises a unit 20a where a safety-related application is running and carried out. This safety-related application processes the safety-related data packets which may be further processed in an encryption unit 21a of first CPU 3. Within this encryption unit 21a a safety layer 22 may be included to the processed safety-related data packets before they are transmitted to the host device 11.

The second CPU 4, according to one example of the present invention, is described with reference to fig. 3b. The second CPU 4 differs from the first CPU 3 in fig. 3a in that no safety-related application is provided. The second CPU 4 instead uses a unit 20b with a non-safety-related application for processing the non-safety-related data. Therefore, it is not possible to process data packets which are categorized into any of safety integrity levels 1 to 4. The illustrative second CPU 4 also has an encryption unit 21b, but this unit 21b may be omitted, since it is not necessary to include a safety layer 22 to the processed non-safety-related data packets. A second RTOS is not mandatory, but preferred.

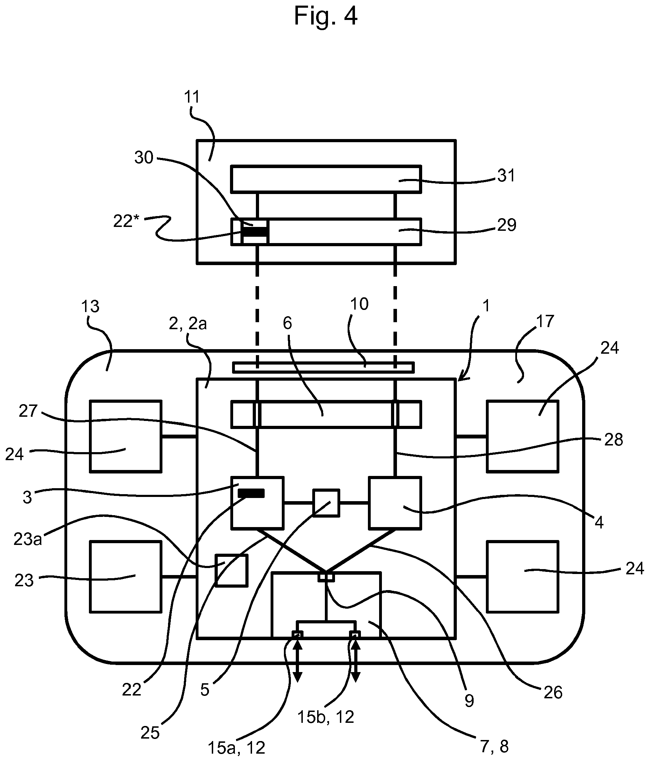

Reference is made to fig. 4 showing an interface card 13 being wired or wirelessly connected to a host device 11. The exemplary interface card 13 comprises the multicore architecture 1 according to the embodiment shown in fig. 2. The interface card 13 further provides a memory 23 being connected to the reconfigurable logic device 2, i.e. the FPGA 2a. Other components 24 may be connected to the FPGA 2a, too.

A method of processing data packets comprising one or more safety-related data packets will be described in the following.

Data packets comprising one or more safety-related data packets and one or more non-safety-related data packets are sent from a network, e.g. a train communication network to the first input 15a and/or the second input 15b of the network interface module 7, which in the exemplary embodiments, is a three-port Ethernet switch 8. The data packets are split into one or more safety-related data packets and into one or more non-safety-related data packets by the data splitting device 9 which in the preferred embodiment is formed as a filtering device 16a.

The safety-related data packets are sent via line 25 to the first CPU 3 being processed there. The non-safety-related data is transmitted via line 26 to the second CPU 4 being processed there. The interprocessor communication device 5 ensures, that the processing of the non-safety-related data within the second CPU 4 does not interfere the processes running on the first CPU 3. The first CPU 3 processes safety-related data packets and the second CPU 4 processes non-safety-related data packets. Additionally, within the first encryption unit 21a of the first CPU 3 a safety layer 22 is included to the one or more processed safety-related data packets. The processed safety-related data packets are transmitted via line 27 to the digital interface module 6, which, may be a two channel 14 digital interface module 6. Via line 28 the processed non-safety-related data is also transmitted to the digital interface module 6.

This digital interface module 6 enables transmission of the processed safety-related data packets to the host device 11, especially to a host driver 29. The host driver 29 enables communication with the multicore architecture 1 and therefore with the interface card 13. Usually the host device 11 also comprises an operating system layer which is needed to adapt the host driver 29 to the host target platform and, if present, the host operating system. Within the host driver 29 a decryption unit 30 is provided, that is configured to check, if the safety layer 22 is correct and if the processed safety-related data packet is intact or not. Accordingly the processed non-safety-related data packets are also received by the host device 11 without searching or checking for a safety layer 22. Within the host device 11 the host application 31 processes the data packets coming from the TCN via the multicore architecture 1. Within the host application 31 a typical control application may be running, e.g. a door control application on the train.

With the present invention it is possible to update a second real time operating system 18b that may be within or running on the second CPU. Also the non-safety-related application 20b may be upgraded or replaced. Therefore the switch 8 may act as a programming port 12 being configured to communicate with the second CPU 4. Via this programming port 12 the firmware and/or the second real time operating system within the second CPU 4 may be changed, updated or replaced. By use of the interprocessor communication device 5 this updating, changing or replacing is conducted without affecting processes running on the first CPU 3. In a optional aspect, the new application/firmware is loaded into a memory (23a) of the FPGA 2a via the switch 8. Afterwards the new application/firmware is installed with the help of the first CPU 3 via the interprocessor communication device 5 onto the second CPU 4. A reboot of the reconfigurable logic device 2 may be necessary afterwards.

Programming of the interface card 13 may be performed via an Ethernet-port as described above, via a special (hardware) programming plug, or via the host interface 10 and/or the digital interface module 6.

The preceding description is exemplary rather than limiting in nature. Variations and modifications to the disclosed examples may be apparent to those skilled in the art. They do not necessarily depart from the essence of this invention.

### LIST OF REFERENCES

- 1: multicore architecture
- 2: reconfigurable logic device
- 2a: FPGA (field programmable gate array)
- 3: first CPU (central processor unit / first microprocessor)
- 4: second CPU (central processor unit / second microprocessor)
- 5: interprocessor communication device
- 6: digital interface module (for peripheral; e.g. for host device)
- 7: network interface module (for network; e.g. for TCN devices)
- 8: switch
- 9: data splitting device
- 10: host interface
- 11: host device
- 12: programming port
- 13: interface card
- 14: channel
- 14a: first channel (safety-related data channel)
- 14b: second channel (non-safety-related data channel)
- 15a: first input
- 15b: second input
- 16: output port
- 16a: filtering device
- 16b: buffering device (for incoming data from TCN)
- 17: board (e.g. printed board)
- 18a: first real time operating system
- 18b: second real time operating system
- 19a: first network communication unit
- 19b: second network communication unit
- 20a: unit with safety-related application
- 20b: unit with non-safety-related application
- 21a: encryption unit (first CPU)
- 21b: encryption unit (second CPU)
- 22: safety layer
- 22*: safety layer
- 23: memory
- 23a: memory (e.g. flash)
- 24: component
- 25: line
- 26: line
- 27: line
- 28: line
- 29: host driver
- 30: decryption unit
- 31: host application (unit)

## Claims

1. A multicore architecture (1) for railway safety-related applications, the architecture comprising:
a data splitting device (9) being configured to split data packets into safety-related data packets, which is all data which is categorized within one of safety integrity levels 1 to 4, and into the non-safety-related data packets, which is all data which either has no categorization or which belongs to safety integrity level 0,
a logic device (2) in form of a reconfigurable field programmable gate array (FPGA) (2a);
the logic device (2) including a first CPU (3) and a second CPU (4);
the first CPU (3) being configured to process safety-related data packets; and
the second CPU (4) being configured to process non-safety-related data packets only,
whereas an interprocessor communication device (5) is provided for linking the first CPU (3) to the second CPU (4),
whereas the interprocessor communication device (5) is implemented on the reconfigurable logic device (2) itself and serves as a hardware firewall,
whereas the interprocessor communication device (5) is configured to grant access to the data of or on the second CPU (4), but it is configured to deny access to the data of or on the first CPU (3), such that the first CPU (3) may access to the data on the second CPU (4), but not the other way round, and thereby blocking interference and/or disturbance of the processes running on the first CPU (3) by the processes of the second CPU (4),
**characterized in that** the first CPU (3) comprises an encryption unit (21a) to process safety-related data packets, whereas the encryption unit (21a) is configured to include a safety layer (22) into one or more processed safety-related data packets, whereas the safety layer (22) adds a checksum and/or other information to the processed safety-related data packets enabling a host device (11) to detect if a data packet is intact or not.

2. The multicore architecture (1) according to claim 1, **characterized in that** a digital interface module (6) is provided, the digital interface module (6) being configured to at least indirectly connect one or more peripheral devices to the first CPU (3) and/or the second CPU (4).

3. The multicore architecture (1) according to claim 1 or 2, **characterized in that** a network interface module (7) is provided the network interface module (7) being configured to at least indirectly connect one or more network devices to the first CPU (3) and/or the second CPU (4).

4. The multicore architecture (1) according to claim 3, **characterized in that** the network interface module (7) is formed as a multiport Ethernet switch (8).

5. The multicore architecture (1) according to any of claims 1 to 4, **characterized in that** a host interface (10) is provided to connect at least indirectly to the first CPU (3) and/or the second CPU (4) for transmitting processed data packets to a host device (11).

6. The multicore architecture (1) according to any of claims 1 to 5, **characterized in that** the second CPU (4) is configured to be reprogrammable, whereas the reconfigurable logic device (2) includes a memory (23a) being configured to store at least the non-safety-related data packets.

7. A method of processing data packets within a multicore architecture according to any of claims 1 to 6, the data packets comprising one or more safety-related data packets, which is all data which is categorized within one of safety integrity levels 1 to 4, and one or more non-safety-related data packets, which is all data which either has no categorization or which belongs to safety integrity level 0, comprising the steps of:
splitting the one or more safety-related data packets from the non-safety-related data packets by the data splitting device (9);
processing the safety-related data packets in the first CPU (3) which is configured to process the safety-related data packets thereby producing one or more processed safety-related data packets having a safety layer (22) included by the encryption unit (21a) of the first CPU (3), whereas the safety layer (22) adds a checksum and/or other information to the processed safety-related data packets enabling a host device (11) to detect if a data packet is intact or not; and
processing the one or more non-safety-related data packets in a second CPU (4) which is configured to process non-safety-related data packets only, thereby producing one or more processed non-safety-related data packets;
whereas the interprocessor communication device (5) grants access to the data of or on the second CPU (4), but denies access to the data of or on the first CPU (3), such that the first CPU (3) may access to the data on the second CPU (4), but not the other way round, thereby blocking interference and/or disturbance of the processes running on the first CPU (3) by the processes of the second CPU (4).

8. The method of claim 7, further including the step of:
transmitting the processed safety-related data packets to a host device (11) or a host system.

9. The method of any of claims 7 or 8, further comprising:
providing a programming port (12) being configured to communicate with the second CPU (4); and
updating of a firmware and/or a second real time operating system within the second CPU (4) via programming port.

10. An Interface card (13) being configured to link a host device (11) to a communication network, the interface card (13) comprising a multicore architecture (1) according to any of claims 1 to 6.

## Patentansprüche

1. Mehrkernprozessor (1) für sicherheitsbezogene Eisenbahnanwendungen, wobei der Prozessor Folgendes umfasst:
eine Datenaufteilungsvorrichtung (9), die so konfiguriert ist, dass sie Datenpakete aufteilt in sicherheitsbezogene Datenpakete, welche Daten sind, die in eine der Sicherheitsintegritätsstufen 1 bis 4 kategorisiert sind, und in nicht sicherheitsbezogene Datenpakete, welche Daten sind, die entweder keine Kategorisierung aufweisen oder zur Sicherheitsintegritätsstufe 0 gehören,
ein logisches Gerät (2) in Form eines rekonfigurierbaren, feldprogrammierbaren Gate-Arrays (FPGA) (2a);
wobei das logische Gerät (2) eine erste CPU (3) und eine zweite CPU (4) enthält; wobei die erste CPU (3) so konfiguriert ist, dass sie sicherheitsbezogene Datenpakete verarbeitet; und
die zweite CPU (4) so konfiguriert ist, dass sie nur nicht-sicherheitsbezogene Datenpakete verarbeitet,
wobei eine Interprozessor-Kommunikationsvorrichtung (5) bereitgestellt ist, um die erste CPU (3) mit der zweiten CPU (4) zu verbinden,
wobei die Interprozessor-Kommunikationsvorrichtung (5) auf dem rekonfigurierbaren logischen Gerät (2) selbst implementiert ist und als Hardware-Firewall dient,
wobei die Interprozessor-Kommunikationsvorrichtung (5) so konfiguriert ist, dass sie den Zugriff auf die Daten der oder auf der zweiten CPU (4) gewährt, aber sie so konfiguriert ist, dass sie den Zugriff auf die Daten der ersten CPU (3) verweigert,
so dass die erste CPU (3) auf die Daten der zweiten CPU (4) zugreifen kann, aber nicht umgekehrt, und dadurch eine Beeinflussung und/oder Störung der auf der ersten CPU (3) ablaufenden Prozesse durch die Prozesse der zweiten CPU (4) blockiert,
**dadurch gekennzeichnet, dass** die erste CPU (3) eine Verschlüsselungseinheit (21a) umfasst, um sicherheitsbezogene Datenpakete zu verarbeiten, wobei die Verschlüsselungseinheit (21a) so konfiguriert ist, dass sie eine Sicherheitsschicht (22) in ein oder mehrere verarbeitete sicherheitsbezogene Datenpakete einfügt, wobei die Sicherheitsschicht (22) eine Prüfsumme und/oder andere Informationen zu den verarbeiteten sicherheitsbezogenen Datenpaketen hinzufügt, die es einem Host-Gerät (11) ermöglichen, zu erkennen, ob ein Datenpaket intakt ist oder nicht.

2. Mehrkernprozessor (1) nach Anspruch 1, **dadurch gekennzeichnet, dass** ein digitales Schnittstellenmodul (6) bereitgestellt ist, wobei das digitale Schnittstellenmodul (6) so konfiguriert ist, dass es ein oder mehrere Peripheriegeräte zumindest indirekt mit der ersten CPU (3) und/oder der zweiten CPU (4) verbindet.

3. Mehrkernprozessor (1) nach Anspruch 1 oder 2, **dadurch gekennzeichnet, dass** ein Netzwerk-Schnittstellenmodul (7) bereitgestellt ist, wobei das Netzwerk-Schnittstellenmodul (7) so konfiguriert ist, dass es ein oder mehrere Netzwerkgeräte zumindest indirekt mit der ersten CPU (3) und/oder der zweiten CPU (4) verbindet.

4. Mehrkernprozessor (1) nach Anspruch 3, **dadurch gekennzeichnet, dass** das Netzwerkschnittstellenmodul (7) als Multiport-Ethernet-Switch (8) ausgebildet ist.

5. Mehrkernprozessor (1) nach einem der Ansprüche 1 bis 4, **dadurch gekennzeichnet, dass** eine Host-Schnittstelle (10) bereitgestellt ist, die zumindest indirekt mit der ersten CPU (3) und/oder der zweiten CPU (4) verbunden ist, um verarbeitete Datenpakete an ein Host-Gerät (11) zu übermitteln.

6. Mehrkernprozessor (1) nach einem der Ansprüche 1 bis 5, **dadurch gekennzeichnet, dass** die zweite CPU (4) so konfiguriert ist, dass sie reprogrammierbar ist, während das rekonfigurierbare logische Gerät (2) einen Speicher (23a) enthält, der so konfiguriert ist, dass er zumindest die nicht sicherheitsbezogenen Datenpakete speichern kann.

7. Verfahren zum Verarbeiten von Datenpaketen in einem Mehrkernprozessor nach einem der Ansprüche 1 bis 6, wobei die Datenpakete ein oder mehrere sicherheitsbezogene Datenpakete umfassen, welche Daten sind, die in eine der Sicherheitsintegritätsstufen 1 bis 4 kategorisiert sind, und ein oder mehrere nicht sicherheitsbezogene Datenpakete, welche Daten sind, die entweder keine Kategorisierung aufweisen oder zur Sicherheitsintegritätsstufe 0 gehören, aufweisend die folgenden Schritte:
Aufteilen des einen oder der mehreren sicherheitsrelevanten Datenpakete von den nicht sicherheitsrelevanten Datenpaketen durch die Datenteilungsvorrichtung (9); Verarbeiten der sicherheitsrelevanten Datenpakete in der ersten CPU (3), die konfiguriert ist, um die sicherheitsrelevanten Datenpakete zu verarbeiten, wodurch ein oder mehrere verarbeitete sicherheitsrelevante Datenpakete erzeugt werden,
die eine Sicherheitsschicht (22) aufweisen, welche durch die Verschlüsselungseinheit (21a) der ersten CPU (3) eingebracht wurde, wobei die Sicherheitsschicht (22) eine Prüfsumme und/oder andere Informationen zu den verarbeiteten sicherheitsrelevanten Datenpaketen hinzufügt, die es einem Host-Gerät (11) ermöglichen, zu erkennen, ob ein Datenpaket intakt ist oder nicht; und
Verarbeiten des einen oder der mehreren nicht sicherheitsbezogenen Datenpakete in einer zweiten CPU (4), die so konfiguriert ist, dass sie nur nicht sicherheitsbezogene Datenpakete verarbeitet, wodurch ein oder mehrere verarbeitete nicht sicherheitsbezogene Datenpakete erzeugt werden;
wobei die Interprozessor-Kommunikationsvorrichtung (5) den Zugriff auf die Daten der oder auf der zweiten CPU (4) gewährt, aber den Zugriff auf die Daten der oder auf der ersten CPU (3) verweigert, so dass die erste CPU (3) auf die Daten der zweiten CPU (4) zugreifen kann, aber nicht umgekehrt, wodurch eine Beeinträchtigung und/oder Störung der auf der ersten CPU (3) laufenden Prozesse durch die Prozesse der zweiten CPU (4) blockiert wird.

8. Verfahren nach Anspruch 7, das ferner den folgenden Schritt umfasst:
Übertragen der verarbeiteten sicherheitsrelevanten Datenpakete an ein Host-Gerät (11) oder ein Host-System.

9. Verfahren nach einem der Ansprüche 7 oder 8, ferner umfassend:
Bereitstellen eines Programmierports (12), der zur Kommunikation mit der zweiten CPU (4) konfiguriert ist; und
Aktualisieren einer Firmware und/oder eines zweiten Echtzeitbetriebssystems in der zweiten CPU (4) über den Programmierport.

10. Schnittstellenkarte (13), die so konfiguriert ist, dass sie ein Host-Gerät (11) mit einem Kommunikationsnetz verbindet, wobei die Schnittstellenkarte (13) einen Mehrkernprozessor (1) nach einem der Ansprüche 1 bis 6 umfasst.

## Revendications

1. Architecture multicoeur (1) pour des applications relatives à la sécurité ferroviaire, l'architecture comprenant :
un dispositif de séparation de données (9) configuré pour séparer des paquets de données en paquets de données relatifs à la sécurité, qui sont toutes des données qui sont catégorisées dans l'un des niveaux d'intégrité de sécurité 1 à 4, et en paquets de données non relatifs à la sécurité, qui sont toutes des données qui soit n'ont pas de catégorisation, soit appartiennent au niveau d'intégrité de sécurité 0, un dispositif logique (2) sous la forme d'un réseau prédiffusé programmable par l'utilisateur (FPGA) (2a) reconfigurable ;
le dispositif logique (2) incluant une première UCT (3) et une seconde UCT (4) ; la première UCT (3) étant configurée pour traiter des paquets de données relatifs à la sécurité ; et la seconde UCT (4) étant configurée pour traiter uniquement des paquets de données non relatifs à la sécurité,
tandis qu'un dispositif de communication interprocesseur (5) est fourni pour relier la première UCT (3) à la seconde UCT (4),
tandis que le dispositif de communication interprocesseur (5) est implémenté sur le dispositif logique (2) reconfigurable lui-même et sert de pare-feu matériel,
tandis que le dispositif de communication interprocesseur (5) est configuré pour accorder l'accès aux données de ou sur la seconde UCT (4), mais est configuré pour refuser l'accès aux données de ou sur la première UCT (3), de sorte que la première UCT (3) peut accéder aux données sur la seconde UCT (4), mais pas l'inverse, et bloquer ainsi les interférences et/ou perturbations des processus s'exécutant sur la première UCT (3) par les processus de la seconde UCT (4),
**caractérisé en ce que** la première UCT (3) comprend une unité de chiffrement (21a) pour traiter des paquets de données relatifs à la sécurité, tandis que l'unité de chiffrement (21a) est configurée pour inclure une couche de sécurité (22) dans un ou plusieurs paquets de données relatifs à la sécurité traités, tandis que la couche de sécurité (22) ajoute une somme de contrôle et/ou d'autres informations aux paquets de données relatifs à la sécurité traités permettant à un dispositif hôte (11) de détecter si un paquet de données est intact ou non.

2. Architecture multicoeur (1) selon la revendication 1, **caractérisée en ce qu'**un module d'interface numérique (6) est fourni, le module d'interface numérique (6) étant configuré pour connecter au moins indirectement un ou plusieurs dispositifs périphériques à la première UCT (3) et/ou à la seconde UCT (4).

3. Architecture multicoeur (1) selon la revendication 1 ou 2, **caractérisée en ce qu'**un module d'interface de réseau (7) est fourni, le module d'interface de réseau (7) étant configuré pour connecter au moins indirectement un ou plusieurs dispositifs de réseau à la première UCT (3) et/ou à la seconde UCT (4).

4. Architecture multicoeur (1) selon la revendication 3, **caractérisée en ce que** le module d'interface de réseau (7) est sous la forme d'un commutateur Ethernet multiport (8).

5. Architecture multicoeur (1) selon l'une quelconque des revendications 1 à 4, **caractérisée en ce qu'**une interface hôte (10) est fournie pour se connecter au moins indirectement à la première UCT (3) et/ou à la seconde UCT (4) afin de transmettre des paquets de données traités à un dispositif hôte (11).

6. Architecture multicoeur (1) selon l'une quelconque des revendications 1 à 5, **caractérisée** en ce la seconde UCT (4) est configurée pour être reprogrammable, tandis que le dispositif logique (2) reconfigurable inclut une mémoire (23a) configurée pour stocker au moins les paquets de données non relatifs à la sécurité.

7. Procédé de traitement de paquets de données au sein d'un architecture multicoeur selon l'une quelconque des revendications 1 à 6, les paquets de données comprenant un ou plusieurs paquets de données relatifs à la sécurité, qui sont toutes des données qui sont catégorisées dans l'un des niveaux d'intégrité de sécurité 1 à 4, et un ou plusieurs paquets de données non relatifs à la sécurité, qui sont toutes des données qui soit n'ont pas de catégorisation, soit appartiennent au niveau d'intégrité de sécurité 0, comprenant les étapes consistant à :
séparer les un ou plusieurs paquets de données relatifs à la sécurité des paquets de données non relatifs à la sécurité par le dispositif de séparation de données (9) ;
traiter les paquets de données relatifs à la sécurité dans la première UCT (3) qui est configurée pour traiter les paquets de données relatifs à la sécurité, pour ainsi produire un ou plusieurs paquets de données relatifs à la sécurité traités présentant une couche de sécurité (22) incluse par l'unité de chiffrement (21a) de la première UCT (3), tandis que la couche de sécurité (22) ajoute une somme de contrôle et/ou d'autres informations aux paquets de données relatifs à la sécurité traités permettant à un dispositif hôte (11) de détecter si un paquet de données est intact ou non ; et
traiter les un ou plusieurs paquets de données non relatifs à la sécurité dans une seconde UCT (4) qui est configurée pour traiter uniquement des paquets de données non relatifs à la sécurité, pour ainsi produire un ou plusieurs paquets de données non relatifs à la sécurité traités ;
tandis que le dispositif de communication interprocesseur (5) accorde l'accès aux données de ou sur la seconde UCT (4), mais refuse l'accès aux données de ou sur la première UCT (3), de sorte que la première UCT (3) peut accéder aux données sur la seconde UCT (4), mais pas l'inverse, en bloquant ainsi les interférences et/ou perturbations des processus s'exécutant sur la première UCT (3) par les processus de la seconde UCT (4).

8. Procédé selon la revendication 7, incluant en outre l'étape consistant à :
transmettre les paquets de données relatifs à la sécurité traités à un dispositif hôte (11) ou à un système hôte.

9. Procédé selon l'une quelconque des revendications 7 ou 8, comprenant en outre :
la fourniture d'un port de programmation (12) configuré pour communiquer avec la seconde UCT (4) ; et
la mise à jour d'un micrologiciel et/ou d'un second système d'exploitation en temps réel dans la seconde UCT (4) via un port de programmation.

10. Carte d'interface (13) configurée pour relier un dispositif hôte (11) à un réseau de communication, la carte d'interface (13) comprenant une architecture multicoeur (1) selon l'une quelconque des revendications 1 à 6.
